# EUROPEAN PATENT APPLICATION

(11) **EP 3 273 366 A1**
(43) Date of publication of application: **24.01.2018**
(21) Application number: 15885401.8
(22) Date of filing: 16.03.2015
(51) Int. Cl.: G06F 17/50

(54) **ROOM MODEL EXTRACTION DEVICE, ROOM MODEL EXTRACTION SYSTEM, ROOM MODEL EXTRACTION PROGRAM, AND ROOM MODEL EXTRACTION METHOD**

(71) Applicant: Mitsubishi Electric Corporation, Chiyoda-ku Tokyo 100-8310 (JP)
(72) Inventor: SUNADA, Hideyuki, Tokyo 100-8310 (JP)
(74) Representative: Lavoix
(86) International application number: PCT/JP2015/057752
(87) International publication number: WO 2016/147304

(57) **Abstract**

An extraction unit (120) extracts a starting component from a BIM (40) that is a building information model. The extraction unit (120) searches for a plurality of building components adjacent to each other, with respect to the BIM (40), by starting from the starting component, and extracts a virtual room constituted by virtual members from the BIM (40) by placing a virtual member on each of a plurality of building components obtained as a search result. The creation unit (130) sets, for each of the virtual members in the virtual room, a piece of attribute information associated with the building component on which the virtual member is placed from among pieces of attribute information included in the BIM (40), and creates a virtual room, in which pieces of attribute information are set, as a room model (51).

## Description

### Technical Field

The present invention relates to a room model extraction device, a room model extraction system, a room model extraction program, and a room model extraction method to extract a room from three-dimensional building data such as BIM data.

### Background Art

A mainstream method for extracting a room model from three-dimensional building data has been a method of manually selecting respective objects (building members) and extracting the selected objects as a room. This method, however, has a problem in that specification of a large number of components of a room, such as a wall, a floor, and a ceiling, is necessary for each room, which is a burden on work time. To address the problem, Patent Literature 1 discloses a system for searching for building members radially from a position specified by a user and setting a boundary of a room.

The conventional method saves the labor of specifying each of building members, but still requires the work of specifying a room, which takes much work time for a building having a large number of rooms or the like.

Furthermore, in a case where thermal load calculation is performed using an extracted room model, there is also a problem in which a part such as a gap between building members, which has little influence on the calculation accuracy but increases the calculation time, is included.

### Citation List

### Patent Literature

Patent Literature 1: JP 2013-58173 A

### Summary of Invention

### Technical Problem

An object of the invention is to provide a system capable of readily extract a room model from three-dimensional building data.

### Solution to Problem

A room model extraction device according to the present invention includes:
an extraction unit to extract a starting component, which is a building component specified as a starting point, from three-dimensional building data including a plurality of building components constituting a building having rooms and attribute information of each of the plurality of building components, search for a plurality of building components adjacent to each other by starting from the starting component, and extract a virtual room constituted by virtual members from the three-dimensional building data by placing a virtual member on each of a plurality of building components obtained as a search result; and
a creation unit to set, for each of the virtual members in the virtual room, a piece of attribute information associated with the building component on which the virtual member is placed from among pieces of attribute information included in the three-dimensional building data, and create a virtual room, in which the pieces of attribute information are set, as a room model.

### Advantageous Effects of Invention

A room model extraction device according to the present invention includes an extraction unit, which allows easy extraction of a room model from three-dimensional building data.

### Brief Description of Drawings

Fig. 1 is a diagram of a first embodiment, which is block diagram of a room model extraction device 100.
Fig. 2 is a table of the first embodiment, which shows information included in a BIM 40 in the form of a table.
Fig. 3 is a diagram of the first embodiment, which is a flowchart illustrating operation of the room model extraction device 100.
Fig. 4 is diagram of the first embodiment, which illustrates Fig. 2 in the form of a sequence diagram.
Fig. 5 is a diagram of the first embodiment, which is a plan view of a room of the BIM 40.
Fig. 6 is a diagram of the first embodiment, which illustrates a state in which a virtual member 11 is placed on an inner side of a door 711.
Fig. 7 is a diagram of the first embodiment, which illustrates a method for determining the inside and the outside of a building.
Fig. 8 is a diagram of the first embodiment, which illustrates Fig. 5 in the form of a three-dimensional schematic view.
Fig. 9 is a diagram of the first embodiment, which illustrates placement of a virtual member 12 on a floor 71 (EFGH) by a placement unit 123.
Fig. 10 is a diagram of the first embodiment, which illustrates interference check performed by the placement unit 123.
Fig. 11 is a diagram of the first embodiment, which illustrates a case where an end point 12-1-1 of a virtual member 12-1 is preset at a certain distance HI or farther from a floor surface.
Fig. 12 is diagram of the first embodiment, which illustrates a case where a virtual member 12-1 is present inside of a window, which is another building component.
Fig. 13 is a diagram of the first embodiment, which illustrates a case where a virtual member 12-1 is present through a wall, which is another component.
Fig. 14 is a diagram of the first embodiment, which illustrates a state in which placement of virtual members on the surface of a floor 71 (EFGH) is completed.
Fig. 15 is a diagram of the first embodiment, which illustrates integration of virtual members.
Fig. 16 is a diagram of the first embodiment, which illustrates a virtual room 50 filled with virtual members.
Fig. 17 is a diagram of the first embodiment, which illustrates a room model 51 where first attribute information and second attribute information are set in a virtual room 50.
Fig. 18 is a diagram of the first embodiment, which illustrates building components that can be adopted as a starting component.
Fig. 19 is a diagram of the first embodiment, which illustrates a configuration of a room model extraction system 1000.
Fig. 20 is a diagram of a second embodiment, which illustrates an example hardware configuration of a room model extraction device 100 implemented by a computer.
Fig. 21 is a diagram of the second embodiment, which explains addition of a room model extraction program 930 to a CAD program 920.

### Description of Embodiments

### First Embodiment

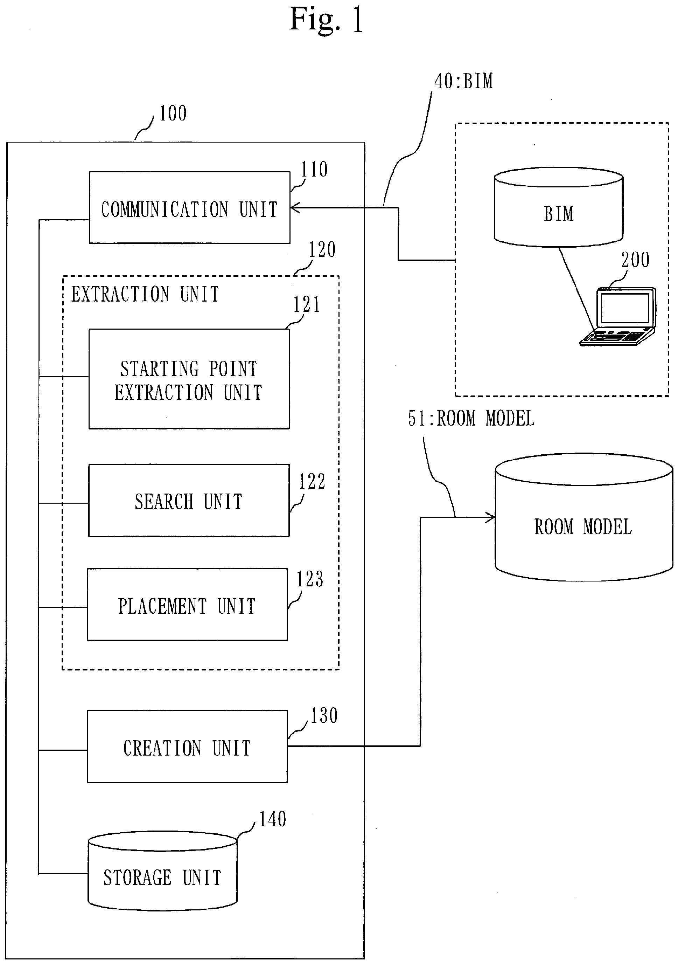

A first embodiment will be described with reference to Figs. 1 to 19. The first embodiment relates to a room model extraction device 100 to extract a room model from a building information model, which is three-dimensional building data. A room model can be readily extracted from the building information model by the room model extraction device 100, which improves the processing efficiency of thermal load calculation. The building information model will be referred to a BIM below. While the BIM is used in the embodiment described below, the three-dimensional building data are not limited to the BIM, but may be other three-dimensional CAD data. Note that the BIM or the three-dimensional CAD data refer to three-dimensional building data including a plurality of building components constituting a building having rooms, and attribute information of each of the building components.

### <***Description of configuration***>

Fig. 1 is a block diagram of the room model extraction device 100. The room model extraction device 100 includes a communication unit 110, an extraction unit 120, a creation unit 130, and a storage unit 140. The extraction unit 120 includes a starting point extraction unit 121, a search unit 122, and a placement unit 123.
(1) The communication unit 110 receives a BIM 40. The BIM 40 is transmitted from a terminal device 200 having the BIM 40. The room model extraction device 100 outputs a room model 51, which will be described below, as a result of processing on the BIM 40 from the creation unit 130. Instead, the communication unit 110 may transmit the room model 51 created by the creation unit 130.
(2) Alternatively, the communication unit 110 receives a BIM 40 from a device (not illustrated) having received a transmission command from the terminal device 200, and the room model extraction device 100 outputs a room model 51 as a result of processing on the BIM 40. Instead, the communication unit 110 may transmit the room model 51 created by the creation unit 130.
(3) Alternatively, the room model extraction device 100 connects to the storage unit 140 storing BIMs to directly acquire a BIM 40, and stores a room model 51 created by the creation unit 130 into the storage unit 140. Instead, the communication unit 110 may transmit the room model 51.

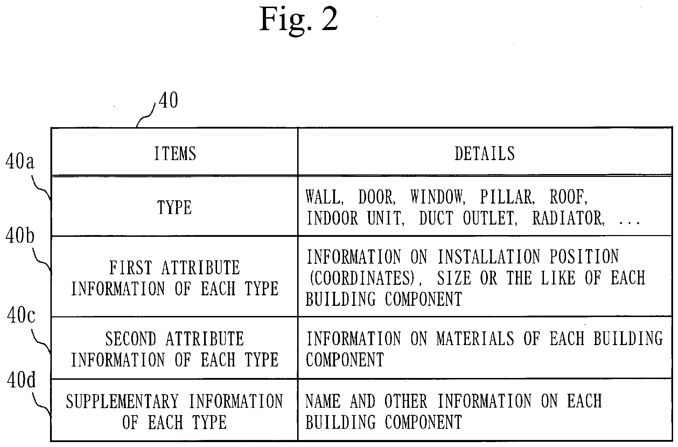

Fig. 2 shows information included in the BIM 40 in the form of a table. As shown in Fig. 2, the column of items includes type 40a, first attribute information 40b of each piece of type information, second attribute information 40c of each piece of type information, and supplementary information 40d of each piece of type information. The type 40a is information representing the type of each of the building components such as a wall and a door. The first attribute information 40b is information such as the installation position, the coordinates, and the size of each of the building components. The second attribute information 40c is information on the materials of each of the building components, such as quality of material and physical properties. Examples of the physical properties include thermal conductivity and specific heat. The supplementary information 40d is the name and other information of each of the building components.

The extraction unit 120 extracts a starting component, which is a building component specified as a starting point, from three-dimensional building data including a plurality of building components constituting a building having rooms and attribute information of each of the plurality of building components. The starting component is prespecified. Specifically, the starting component can be prespecified by an input device 907, which will be described below in a second embodiment. In the embodiments below, a door, and room temperature control equipment such as an indoor unit of an air conditioner, a duct outlet for air conditioning, and a radiator are presented as the starting component. The extraction unit 120 searches for a plurality of building components adjacent to each other, with respect to the BIM 40 from which the starting component is extracted, by starting from the starting component, and extracts a virtual room constituted by virtual members from the BIM 40 by placing a virtual member on each of a plurality of building components obtained as a search result. As shown in Fig. 2, the BIM 40 is information including a plurality of building components constituting a building having rooms, and attribute information of each of the building components.

The creation unit 130 sets, for each of the virtual members in the virtual room, a piece of attribute information associated with the building component on which the virtual member is placed from among pieces of attribute information included in the BIM 40, and creates a virtual room, in which pieces of attribute information are set, as a room model.

The storage unit 140 stores the BIM 40 received by the communication unit 110.

As will be described below, the virtual members are defined in size. For placement of virtual members on the building components, the extraction unit 120 determines whether or not a virtual member to be placed interferes with any of the building components, and adjusts the size of the virtual member to be placed if the virtual member is determined to interfere with any of the building components. This interference check will be described below.

Examples of the prespecified starting component include the following (1) and (2). The starting component may be at least any of the components in the following (1) and (2).
(1) The starting component is a door, which is a building component included in the BIM 40.
(2) The starting component is room temperature control equipment for room temperature control, which is a building component included in the BIM 40. The room temperature control equipment is at least any one of an indoor unit of an air conditioner, a duct outlet for air conditioning, and a radiator.

### <***Description of operation***>

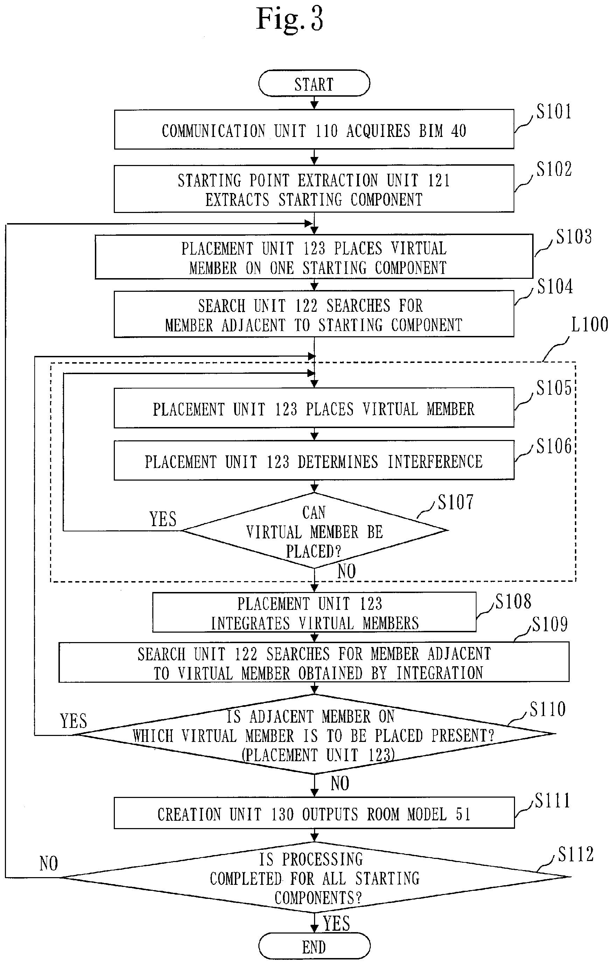

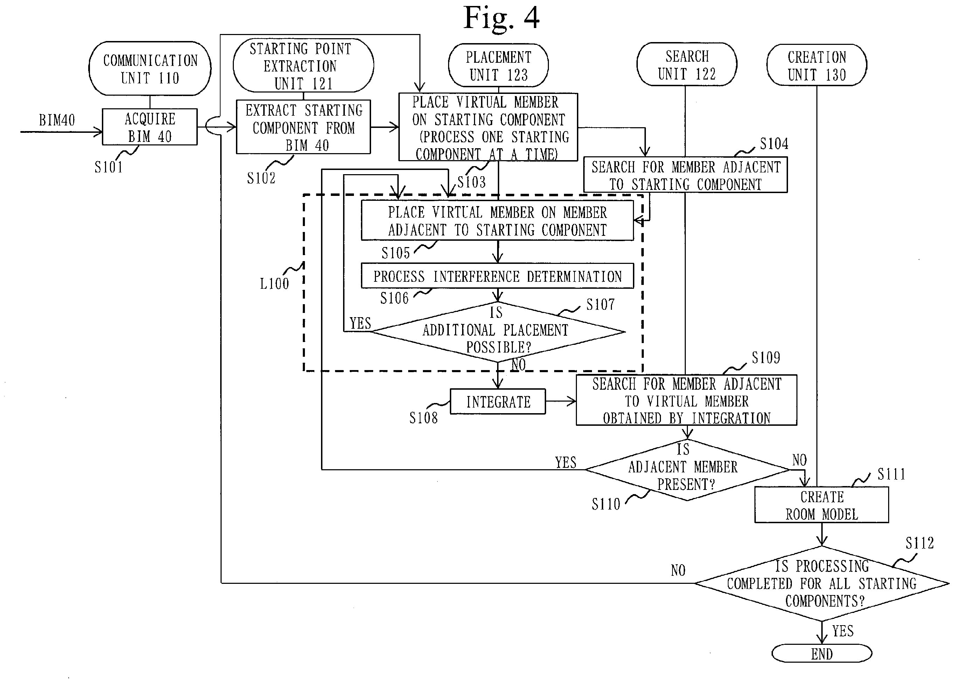

Fig. 3 is a flowchart illustrating operation of the room model extraction device 100. Fig. 4 is a diagram illustrating Fig. 3 in the form of a sequence diagram. The operation of the room model extraction device 100 will be described with reference to Figs. 3 and 4. Hereinafter, step S101 and the like will be referred to as S101 and the like.

### <S101>

In S101, a user inputs BIM 40 to be processed into the room model extraction device 100 by using the terminal device 200. The communication unit 110 receives the BIM 40.

### <S102>

In S102, the starting point extraction unit 121 extracts a prespecified starting component from the BIM 40.

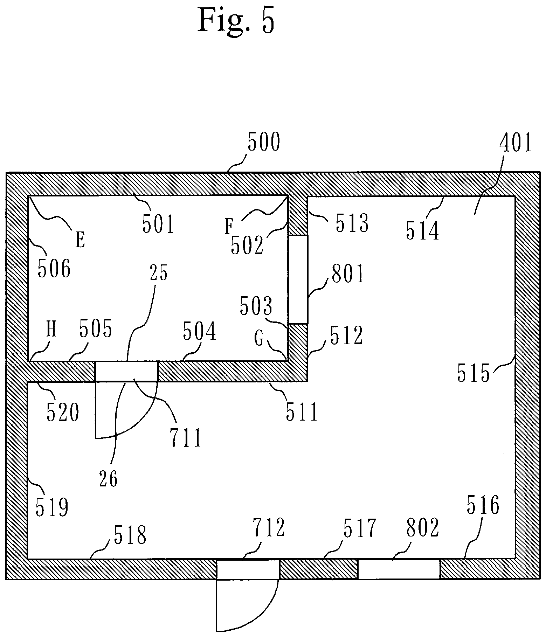

Fig. 5 is a plan view of a room of the BIM 40.

The BIM 40 illustrated in Fig. 5 has a floor 401, a wall 500, doors 711 and 712, and windows 801 and 802. The wall 500 is constituted by walls 501 to 506 and walls 511 to 520. Assume that a door is specified as the starting component. The starting point extraction unit 121 refers to the information shown in Fig. 2, and searches the types 40a of the building components constituting the BIM 40 for a door as the starting component. In the case of Fig. 5, the starting point extraction unit 121 extracts the door 711 and the door 712 as the starting component.

### <S103>

In S103, the placement unit 123 first determines to perform processing using the door 711 as the starting component from among the doors 711 and 712. The placement unit 123 determines the area of the surface (the surface of an inner side 25 or an outer side 26) of the door 711 from the area of the architectural component (Fig. 2) of the door 711, and places a virtual member on the surface of the door 711. A virtual member is a component having only a size, the thickness of which is zero. Assume that the placement unit 123 places a virtual member 11 on the inner side 25 of the door 711.

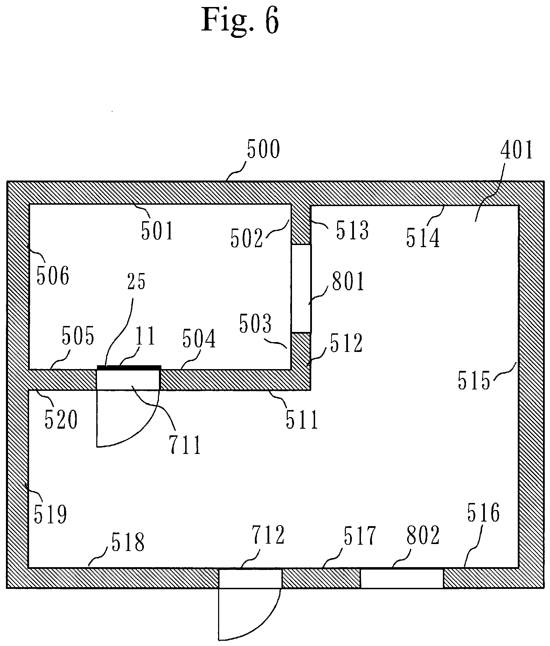

Fig. 6 illustrates a state in which the virtual member 11 is placed on the inner side 25 of the door 711.

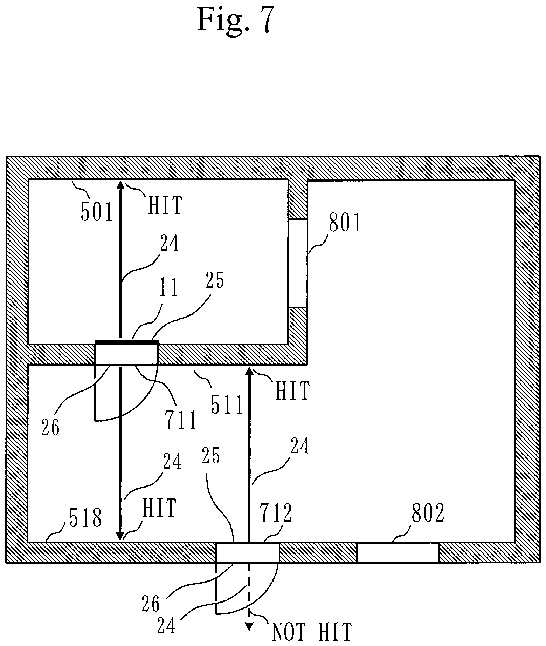

Fig. 7 illustrates a method for determining the inside and the outside of a building. The surface on which a virtual member is to be placed may be any of the inner side 25 and the outer side 26 of the door 711 or 712 that is the starting component. If, however, there is no building component hit by a normal vector 24 extending from the door, the placement unit 123 determines the surface to be outside of the building and does not perform processing on the surface.

### <S104>

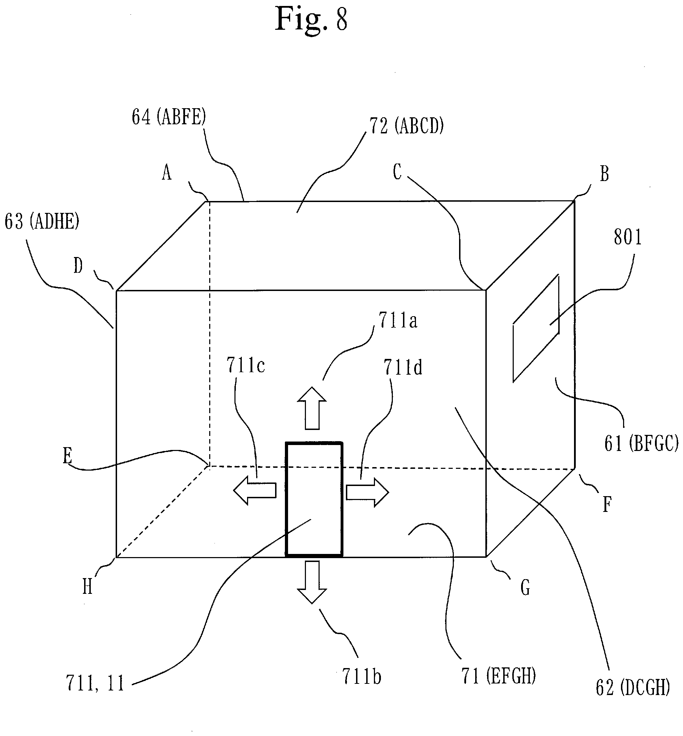

Fig. 8 is a diagram illustrating Fig. 5 in the form of a three-dimensional schematic view. S104 is explained with reference to Fig. 8. A floor EFGH in Fig. 8 corresponds to the floor EFGH in Fig. 5. A ceiling (ABCD) is present above the door 711 in Fig. 8, which is not illustrated in Fig. 5. A wall 61 (BFGC) corresponds to the walls 502 and 503, a wall 62 (DCGH) corresponds to the walls 504 and 505, and a wall 63 (ADHE) corresponds to the wall 506. A wall 64 (ABFE) corresponds to the wall 501, and the search unit 122 refers to the first attribute information 40b, which is shape information, in Fig. 2 and searches for a building component adjacent to the virtual member 11 of the door 711 in S104. The search unit 122 performs the search in four directions from the virtual member 11. The four directions are the directions of arrows 711a, 711b, 711c, and 711d in Fig. 8. The search unit 122 obtains any of the floor 71 (EFGH), the wall 61 (BFGC), the wall 62 (DCGH), the wall 63 (ADHE), and the ceiling 72 (ABCD). Note that the wall 64 (ABFE) can be obtained in step 109, which will be described below. Assume that the search unit 122 obtains the floor 71 (EFGH) as a search result.

### <S105>

In S105, the placement unit 123 places a new virtual member 12 on the surface of the floor 71 (EFGH), which is a member adjacent to the door 711, from a line where the floor 71 (EFGH) and the virtual member 11 of the door 711 are in contact with each other.

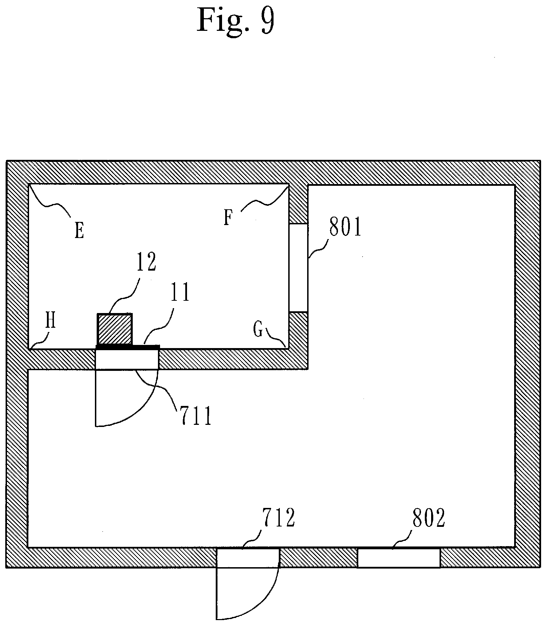

Fig. 9 illustrates placement of the virtual member 12 on the floor 71 (EFGH) by the placement unit 123. Any shape such as a rectangle or a triangle can be specified for the virtual member 12, and any size can be specified for the shape. Specifically, the shape and the size can be specified with the input device 907, which will be described below in the second embodiment. In the first embodiment, assume that a square tile shape having a size of about 5 cm × 5 cm to 15 cm × 15 cm is specified. In the first embodiment, a tile shape of 10 cm × 10 cm is used. The placement unit 123 checks interference of the tile-shaped virtual member 12 with the other building components before placing the virtual member 12. For the interference check, any size can be specified. Specifically, the size for the interference check can be specified with the input device 907, which will be described below in the second embodiment. The placement unit 123 checks the interference at an interference check position 81 at about 3 to 7 cm above the actual floor 71 (EFGH). In the first embodiment, the interference check position 81 is at 5 cm above the floor 71 (EFGH).

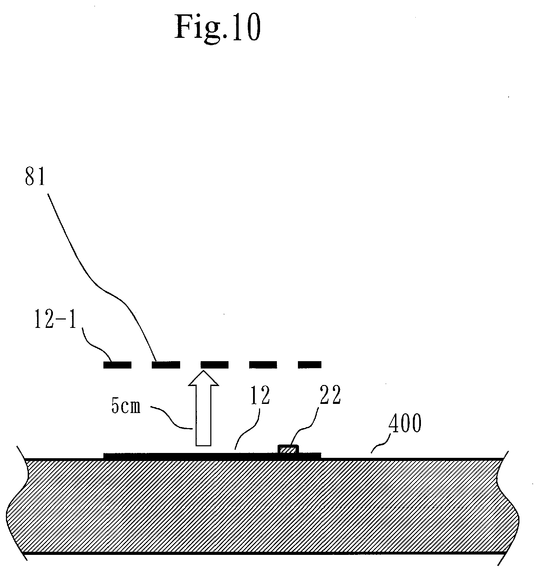

Fig. 10 illustrates the interference check performed by the placement unit 123. The placement unit 123 performs the interference check by using a virtual member 12-1, which is the virtual member 12 placed at the interference check position 81 of 5 cm above, which allows a small projection 22 to be ignored. In the interference check, if the virtual member to be placed hits another building component that is the starting component, the placement unit 123 records a part of a hit building component and an interfered building component, and removes the recorded building components from repeated calculation to avoid redundant calculation.

In addition, the placement unit 123 may adjust the size of a virtual member to be placed in some cases in the interference check.

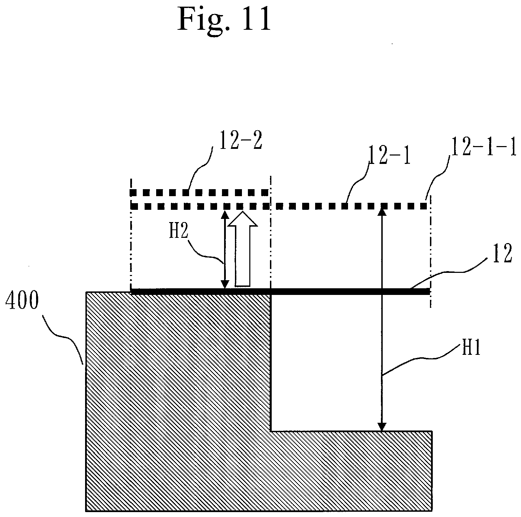

Figs. 11 to 13 illustrate cases where the placement unit 123 adjusts the size of a virtual member. Explanation of the adjustment will be made using the example of the virtual member 12. The virtual member 12 at the interference check position 81 will be referred to as the virtual member 12-1.

Fig. 11 illustrates a case where an end point 12-1-1 of the virtual members 12-1 is present at a certain distance HI or farther from the floor surface of a floor 400.

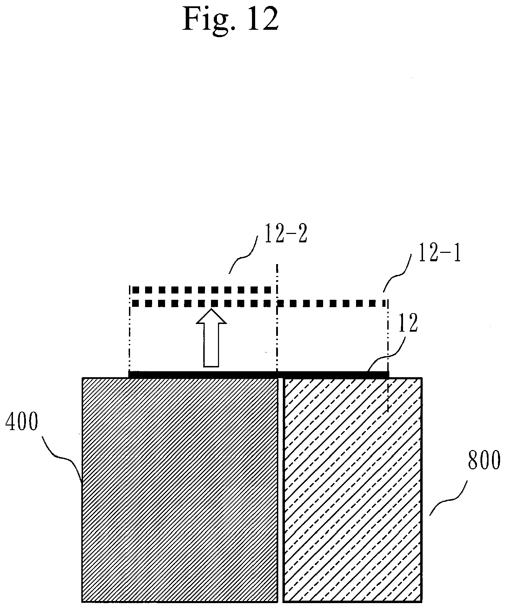

Fig. 12 illustrates a case where the virtual member 12-1 on the floor 400 is present inside of a window 800, which is another building component.

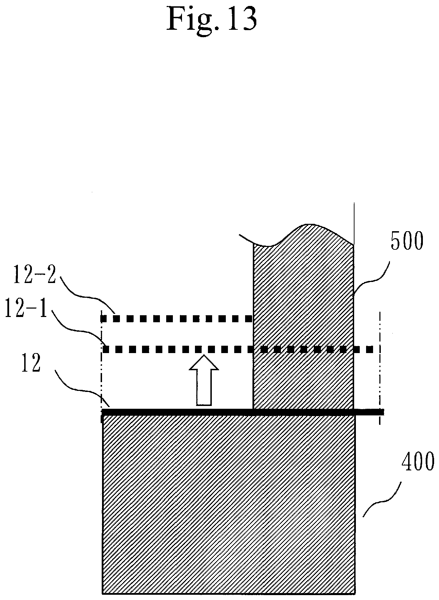

Fig. 13 illustrates a case where the virtual member 12-1 on the floor 400 is present through a wall 500, which is another component. In such cases, the placement unit 123 adjusts the size of the virtual member 12-1. In Fig. 11, the placement unit 123 reduces the size of the virtual member 12-1 to the size of a virtual member 12-2 so that the distance from the floor surface will be a distance H2. In Fig. 12, the placement unit 123 reduces the size of the virtual member 12-1 to the size of a virtual member 12-2 so that the virtual member 12-1 will not interfere with the window 800. In Fig. 13, the placement unit 123 reduces the size of the virtual member 12-1 to the size of a virtual member 12-2 so that the virtual members 12-1 will not interfere with the wall 500.

### <S107>

The placement unit 123 repeats S105, S106, and S107 until no more virtual members can be placed.

### <S108>

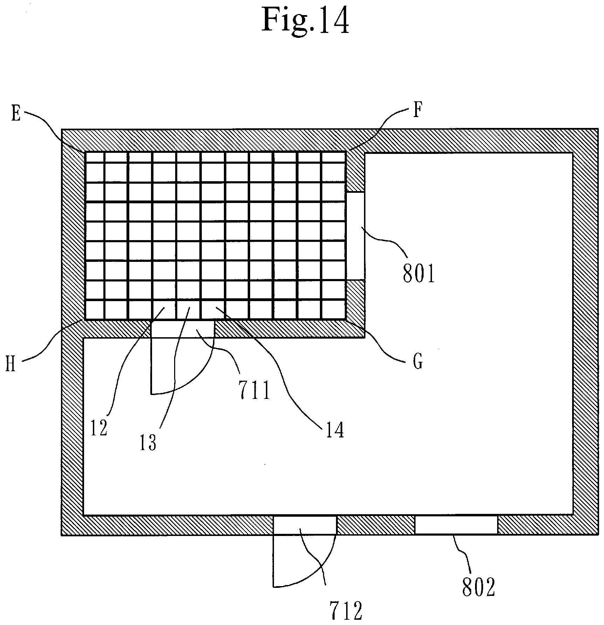

Fig. 14 illustrates a state in which placement of virtual members 12, 13, 14, ... on the surface of a floor 71 (EFGH), which is a building component, is completed. In S108, when placement of virtual members is completed, the placement unit 123 integrates a plurality of virtual members placed on the surfaces of the building components into one virtual member.

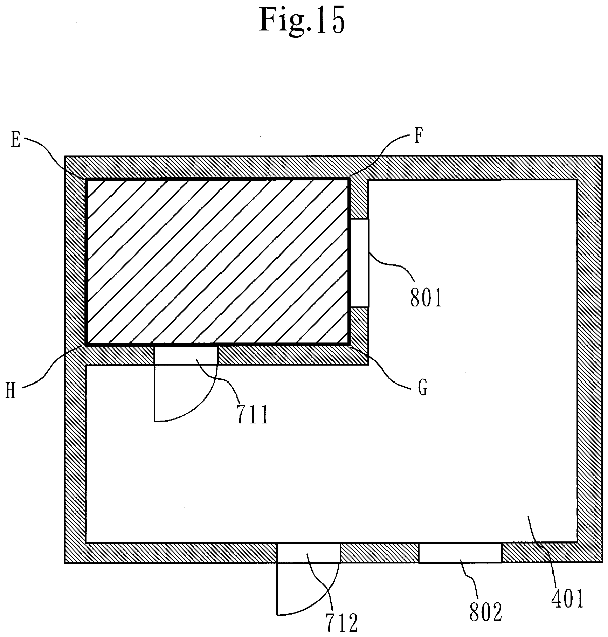

Fig. 15 illustrates integration of the virtual members. In Fig. 15, a plurality of virtual members illustrated as the virtual members 12, 13, 14 and the like in Fig. 14 are integrated into one virtual member represented by rectangular hatching (EFGH).

### <S109>

In S109, the search unit 122 searches for a building component adjacent to the virtual member obtained by the integration. In this example, the search unit 122 searches for an adjacent member that is a building component adjacent to the virtual member (EFGH). With reference to Fig. 8, since the virtual member 11 is already placed on the door 711, the search unit 122 acquires any one of the wall 61 (BFGC), the wall 62 (DCGH), the wall 63 (ADHE), and the wall 64 (ABFE) as a search result. In this case, the result of S110 is YES. When the wall 61 (BFGC) is acquired in S109, the placement unit 123 performs the processing of placing virtual members on the wall 61 (BFGC) similarly to the processing performed on the floor 71 (EFGH) in a loop L100 of S105, S106, and S107 surrounded by a broken line in Figs. 3 and 4. As a result, virtual members placed on the wall 61 (BFGC) are integrated. Subsequently, when the wall 62 (DCGH) is acquired in S109, virtual members are integrated as a result of the processing in L100. Subsequently, when the wall 63 (ADHE) is acquired in S109, virtual members are integrated as a result of the processing in L100. Subsequently, when the wall 64 (ABFE) is acquired in S109, virtual members are integrated as a result of the processing in L100.

In this manner, each time a new building component of a member adjacent to a virtual member obtained by the integration in S109 is acquired by the search by the search unit 122, the placement unit 123 repeats the processing in L100 and S108 similarly on the building component.

### <S110>

If no member adjacent to the virtual member obtained by the integration is present as a result of the determination by the search unit 122 in S110, the processing proceeds to S111. In a state where the processing proceeds to S111, that is, in a state where the result of S110 is NO, a room constituted by the virtual members, that is, a virtual room 50 filled with the virtual members is completed.

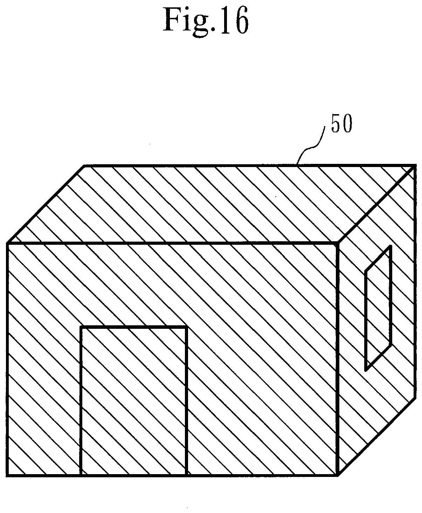

Fig. 16 illustrates the virtual room 50 filled with the virtual members.

### <S111>

In S111, the creation unit 130 sets, for each of the integrated virtual members, thickness information (Fig. 2) that is the first attribute information and material information (Fig. 2) that is the second attribute information of the building component on which the virtual member is placed. Through this setting, the creation unit 130 creates a room model 51 from the virtual room 50.

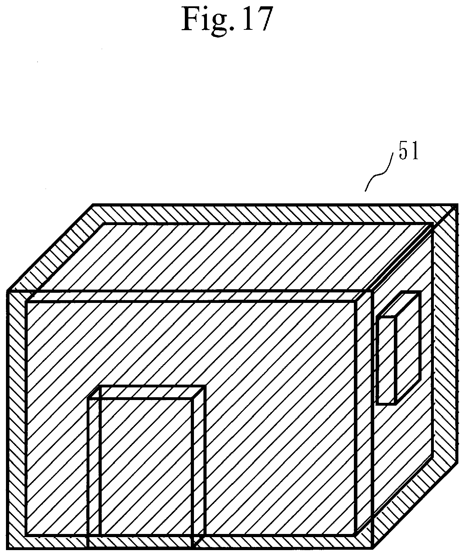

Fig. 17 illustrates a room model 51 where the first attribute information that is the thickness information of a building component and the second attribute information that is the material information of the building component are set.

### <S112>

In S112, the creation unit 130 determines whether the processing of S103 and subsequent steps has been performed for all the starting components. In this example, since the door 712 (Fig. 5) remains as a starting component, the processing returns to S103, and the processing similar to that described above for the door 711 being the starting component is performed.

### <***Explanation of effects***>

Since the room model extraction device 100 includes the extraction unit 120, the extraction unit 120 extracts objects (architectural components) constituting a room starting from a starting component such as a door or an air conditioning indoor unit, for extraction of a room. Thus, the work of extraction of a room model necessary for thermal load calculation and the like can be automated. In addition, since the placement unit 123 adjusts the size of a virtual member through the interference check, a room model where a gap between building members or the like, which has little influence on the calculation accuracy but affects the calculation time, is removed can be extracted.

While the starting component is a door or an indoor unit in the BIM 40 in the examples of Fig. 5 and the like, the starting component may be a building component other than a door and an indoor unit.

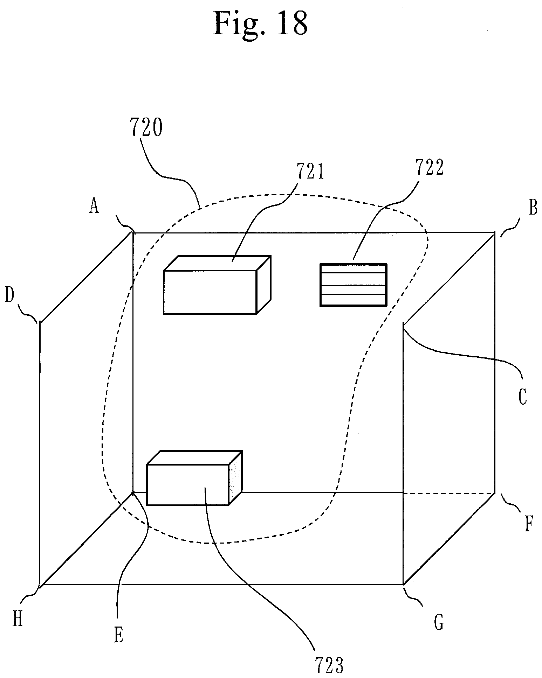

Fig. 18 illustrates building components that can be specified as a starting component. Fig. 18 illustrates the room illustrated in Fig. 8 without the wall 62 (DCGH). In the room in Fig. 18, an indoor unit 721 of an air conditioner, a duct outlet 722 provided for air conditioning, and a radiator 723 are arranged. The indoor unit 721, the duct outlet 722, and the radiator 723 are all room temperature control equipment 720 for room temperature control arranged in the room of the BIM 40. The indoor unit 721, the duct outlet 722, and the radiator 723 are building components that can be specified as a starting component.

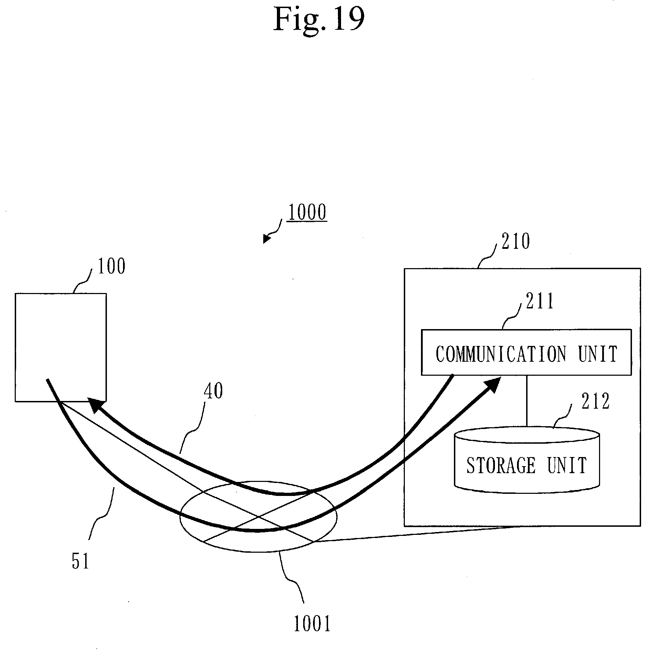

Note that, in Fig. 1, the room model extraction device 100 receives the BIM 40 from the terminal device 200 or receives the BIM 40 from the device having received a command from the terminal device 200. Alternatively, a system illustrated in Fig. 19 may be used.

Fig. 19 illustrates a room model extraction system 1000 in a web service where a room model requesting device 210 uploads a BIM 40 via a network 1001 and the room model extraction device 100 downloads a room model 51 that is a calculation result. The room model requesting device 210 includes a communication unit 211 and a storage unit 212. The storage unit 212 stores the BIM 40, and the communication unit 211 transmits the BIM 40 as a request for a room model to the room model extraction device 100 via the network 1001. Upon receiving the BIM 40, the room model extraction device 100 extracts a room model 51 from the BIM 40, and transmits the room model 51 as a response to the room model requesting device 210.

In the room model extraction system 1000, the room model requesting device 210 can acquire a room model 51 via the network 1001. Thus, a user can acquire a room model 51 regardless of the location of the room model extraction device 100.

### Second Embodiment

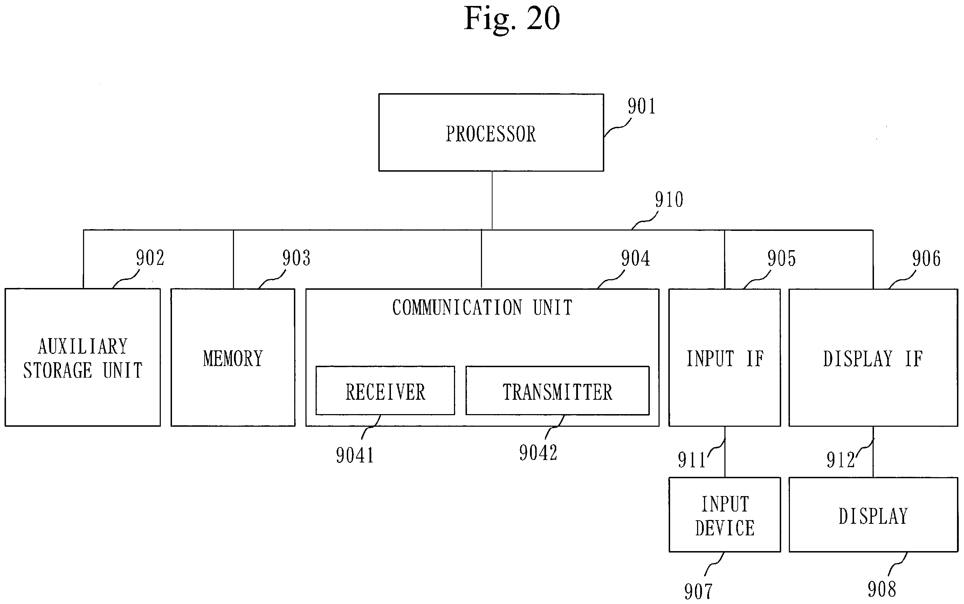

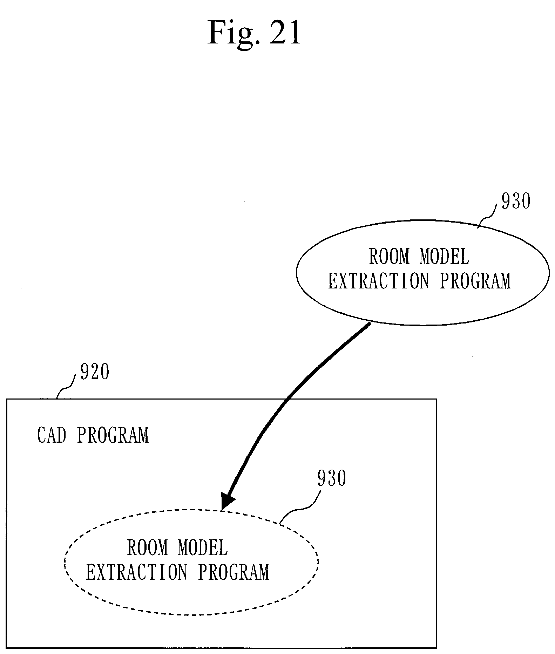

The second embodiment will be described with reference to Figs. 20 and 21.

Fig. 20 illustrates an example hardware configuration of a room model extraction device 100 implemented by a computer. Description will now be made with reference to Fig. 20. The room model extraction device 100, which is a computer, includes hardware such as a processor 901, an auxiliary storage unit 902, a memory 903, a communication unit 904, an input interface 905, and a display interface 906. The processor 901 is connected with the other hardware components via a signal line 910, and controls the other hardware components. The input interface 905 is connected to the input device 907. The display interface 906 is connected to a display 908.

The processor 901 is an integrated circuit (IC) to perform processing. The processor 901 is, for example, a central processing unit (CPU), a digital signal processor (DSP), or a graphics processing unit (GPU). The auxiliary storage unit 902 is, for example, a read only memory (ROM), a flash memory, or a hard disk drive (HDD). The memory 903 is, for example, a random access memory (RAM). The communication unit 904 includes a receiver 9041 to receive data, and a transmitter 9042 to transmit data. The communication unit 904 is, for example, a communication chip or a network interface card (NIC). The input interface 905 is a port to which a cable 911 of the input device 907 is connected. The input interface 905 is, for example, a universal serial bus (USB) terminal. The display interface 906 is a port to which a cable 912 of the display 908 is connected. The display interface 906 is, for example, a USB terminal or an HDMI (registered trademark) (high definition multimedia interface) terminal. The input device 907 is, for example, a mouse, a keyboard, or a touch panel. The display 908 is, for example, a liquid crystal display (LCD).

The auxiliary storage unit 902 stores programs to implement the functions of the communication unit 110, the extraction unit 120, and the creation unit 130 illustrated in Fig. 1 (hereinafter, the communication unit 110 to the creation unit 130 will be collectively referred to as "units"). The programs are loaded into the memory 903, read by the processor 901, and executed by the processor 901. Furthermore, the auxiliary storage unit 902 also stores an operating system (OS). At least part of the OS is loaded into the memory 903, and the processor 901 executes the programs to implement the functions of the "units" while executing the OS. While one processor 901 is illustrated in Fig. 20, the room model extraction device 100 may include a plurality of processors 901. The plurality of processors 901 may then execute the programs to implement the functions of the "units" in cooperation with one another. Furthermore, information, data, signal values, and variable values representing results of processing by the "units" are stored in the memory 903, the auxiliary storage unit 902, or a register or a cache memory in the processor 901.

The "units" may alternatively be provided in the form of "circuitry." Alternatively, a "unit" may be replaced by a "circuit," a "step," a "procedure," or a "process." The "circuit" and "circuitry" are concepts including not only the processor 901 but also other types of processing circuits such as a logic IC, a gate array (GA), an application specific integrated circuit (ASIC), and a field-programmable gate array (FPGA).

As described above, the operation of the "units" of the room model extraction device 100 in the first embodiment can also be regarded as a room model extraction method or a room model extraction program.

Fig. 21 is a diagram explaining addition of a room model extraction program 930 to a CAD program 920. The room model extraction program 930 can be added as a bundle or an add-on to the CAD program 920. This increases the utility of CAD tools.

### Reference Signs List

11, 12: virtual member, 24: normal vector, 25: inner side, 26: outer side, 40: BIM, 50: virtual room, 51: room model, 61 to 64: wall, 71: floor, 72: ceiling, 81: interference check position, 100: room model extraction device, 110: communication unit, 120: extraction unit, 121: starting point extraction unit, 122: search unit, 123: placement unit, 130: creation unit, 140: storage unit, 200: terminal device, 210: room model requesting device, 400, 401: floor, 500, 501 to 520: wall, 711, 712: door, 720: room temperature control equipment, 721: indoor unit, 722: duct outlet, 723: radiator, 800, 801, 802: window, 920: CAD program, 930: room model extraction program, 1000: room model extraction system

## Claims

1. A room model extraction device comprising:
an extraction unit to extract a starting component, which is a building component specified as a starting point, from three-dimensional building data including a plurality of building components constituting a building having rooms and attribute information of each of the plurality of building components, search for a plurality of building components adjacent to each other by starting from the starting component, and extract a virtual room constituted by virtual members from the three-dimensional building data by placing a virtual member on each of a plurality of building components obtained as a search result; and
a creation unit to set, for each of the virtual members in the virtual room, a piece of attribute information associated with the building component on which the virtual member is placed from among pieces of attribute information included in the three-dimensional building data, and create a virtual room, in which the pieces of attribute information are set, as a room model.

2. The room model extraction device according to claim 1, wherein
the virtual members are defined in size, and
for placement of the virtual members on the building components, the extraction unit determines whether a virtual member to be placed interferes with any of the building components, and adjusts the size of the virtual member to be placed if the virtual member is determined to interfere with any of the building components.

3. The room model extraction device according to claim 1 or claim 2, wherein the starting component is a door included in the three-dimensional building data.

4. The room model extraction device according to any one of claims 1 to 3, wherein the starting component is room temperature control equipment for room temperature control included in a room of the three-dimensional building data.

5. The room model extraction device according to claim 4, wherein the room temperature control equipment is at least one of an indoor unit of an air conditioner, a duct outlet for air conditioning, and a radiator.

6. The room model extraction device according to any one of claims 1 to 5, further comprising:
a communication unit to receive the three-dimensional building data, wherein
the extraction unit extracts the starting component from the three-dimensional building data received by the communication unit, extracts the virtual room from the three-dimensional building data from which the starting component has been extracted,
the creation unit creates the room model from the virtual room extracted by the extraction unit, and
the communication unit transmits the created room model.

7. A room model extraction system comprising: a room model requesting device; and a room model extraction device, wherein
the room model requesting device includes:
a communication unit to transmit three-dimensional building data including a plurality of building components constituting a building having rooms and attribute information of each of the plurality of building components,
the room model extraction device includes:
a communication unit to receive the three-dimensional building data;
a storage unit to store the three-dimensional building data received by the communication unit;
an extraction unit to extract a starting component, which is the building component to be a starting point, from the three-dimensional building data stored in the storage unit, search for a plurality of building components adjacent to each other, with respect to the three-dimensional building data from which the starting component is extracted, by starting from the starting component, and extract a virtual room constituted by virtual members from the three-dimensional building data by placing a virtual member on each of a plurality of building components obtained as a search result; and
a creation unit to set, for each of the virtual members in the virtual room, a piece of attribute information associated with the building component on which the virtual member is placed from among pieces of attribute information included in the three-dimensional building data, and creates a virtual room, in which the pieces of attribute information are set, as a room model, and
the communication unit of the room model extraction device transmits the room model to the room model requesting device.

8. A room model extraction program causing a computer to execute:
a process of extracting a starting component, which is a building component specified as a starting point, from three-dimensional building data including a plurality of building components constituting a building having rooms and attribute information of each of the plurality of building components, searching for a plurality of building components adjacent to each other by starting from the starting component, and extracting a virtual room constituted by virtual members from the three-dimensional building data by placing a virtual member on each of a plurality of building components obtained as a search result; and
a process of setting, for each of the virtual members in the virtual room, a piece of attribute information associated with the building component on which the virtual member is placed from among pieces of attribute information included in the three-dimensional building data, and creating a virtual room, in which the pieces of attribute information are set, as a room model.

9. The room model extraction program according to claim 8, capable of being added as a bundle or an add-on to a CAD program.

10. A room model extraction method comprising:
extracting a starting component, which is a building component specified as a starting point, from three-dimensional building data including a plurality of building components constituting a building having rooms and attribute information of each of the plurality of building components;
searching for a plurality of building components adjacent to each other by starting from the starting component;
extracting a virtual room constituted by virtual members from the three-dimensional building data by placing a virtual member on each of a plurality of building components obtained as a search result;
setting, for each of the virtual members in the virtual room, a piece of attribute information associated with the building component on which the virtual member is placed from among pieces of attribute information included in the three-dimensional building data; and
creating a virtual room, in which the pieces of attribute information are set, as a room model.
